# EUROPÄISCHE PATENTSCHRIFT

(11) **EP 2 863 465 B1**
(45) Veröffentlichungstag und Bekanntmachung des Hinweises auf die Patenterteilung: **01.04.2020**
(21) Anmeldenummer: 13188939.6
(22) Anmeldetag: 16.10.2013
(51) Int. Cl.: H01M 8/0662, C25B 15/08, C25B 1/04

(54) **REDOX-VORRICHTUNG**
REDOX DEVICE
DISPOSITIF REDOX

(43) Veröffentlichungstag der Anmeldung: 22.04.2015
(73) Patentinhaber: Airbus Defence and Space GmbH, 82024 Taufkirchen (DE)
(72) Erfinder: Jehle, Walter, 88263 Horgenzell (DE)
(74) Vertreter: Daub, Thomas

(56) Entgegenhaltungen:
- EP-A1- 0 750 361
- EP-A1- 1 988 593
- WO-A1-2006/133576
- DE-A1- 10 013 602
- DE-A1- 19 946 381
- JP-A- 2005 256 899
- JP-A- 2011 148 652
- US-A1- 2013 252 121

## Beschreibung

### Stand der Technik

Die Erfindung betrifft eine Redox-Vorrichtung nach dem Oberbegriff des Anspruchs 1.

Es sind bereits Brennstoffzellen und Elektrolyseure vorgeschlagen worden, die Wasserstoff, Sauerstoff und Wasser als Betriebsstoffe verwenden und die zu einer Entfernung von Wasserdampf aus Strömen von Wasserstoffgas und Sauerstoffgas Kondensatabscheider oder eine semipermeable Membran verwenden. In Kondensatabscheidern werden zur Abtrennung von Wasserdampf Gasströme abgekühlt, so dass der Wasserdampf zu flüssigem Wasser kondensiert. Entstandenes flüssiges Wasser wird anschließend über eine Schwerkraft oder eine Zentrifugalkraft aus dem Strom von Wasserstoffgas und/oder Sauerstoffgas entfernt. An der semipermeablen Membran werden Wassermoleküle des Wasserdampfs zurückgehalten und schlagen sich als flüssiges Wasser nieder, welches dann aufgrund der Schwerkraft ablaufen kann. Trennverfahren unter Verwendung dieser Kondensatabscheider erfordern einen zusätzlichen Energieaufwand zu einer Abkühlung der Gasströme. Ferner funktionieren die genannten Verfahren nur unter Schwerkrafteinwirkung.

Vorrichtungen und Verfahren aus dem Stand der Technik werden in der US 2013/252121 A1 und der DE 199 46 381 A1 offenbart.

Die Aufgabe der Erfindung besteht insbesondere darin, eine gattungsgemäße Vorrichtung mit verbesserten Eigenschaften hinsichtlich eines Energieverbrauchs und einer dauernden Betreibbarkeit mit einem geringen Wartungsaufwand bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Redox-Vorrichtung, insbesondere Wasserstoff-Sauerstoff-Redox-Vorrichtung, zur Durchführung zumindest einer Redoxreaktion unter Verbrauch oder Erzeugung von zumindest einem Reaktionsgas, mit zumindest einem Reaktionsgasleitungssystem zur Führung eines Gasstroms eines Reaktionsgases, und mit zumindest einer Gasreinigungseinheit zu einer Entfernung von Fremdmolekülen aus dem Gasstrom, die mit dem zumindest einen Reaktionsgasleitungssystem verbunden ist.

Es wird vorgeschlagen, dass die zumindest eine Gasreinigungseinheit zumindest eine Sorptionseinheit zu einer Entfernung der Fremdmoleküle aufweist.

Unter einer "Redox-Vorrichtung" soll insbesondere eine Vorrichtung zur Durchführung zumindest einer Redoxreaktion unter Verbrauch oder Erzeugung von zumindest einem Reaktionsgas verstanden werden. Bevorzugt ist die Redox-Vorrichtung als Wasserstoff-Sauerstoff-Redox-Vorrichtung ausgebildet. Insbesondere umfasst die Redox-Vorrichtung mindestens einen Elektrolyseur oder mindestens eine Brennstoffzelle. Unter einem "Elektrolyseur" soll insbesondere eine Einheit mit zumindest zwei Elektroden, mit einem die zwei Elektroden verbindenden Stromkreis, mit zumindest einem zumindest zwischen den zwei Elektroden angeordneten Elektrolyt und/oder mit einer zumindest zwischen den zwei Elektroden angeordneten elektrolytgefüllten oder ionenleitenden Membran, verstanden werden, wobei mittels der Einheit eine Redox-Reaktion durchgeführt wird, bei der unter Aufwendung von Energie in Form von elektrischer Leistung ein Eduktstoff elektrolytisch in zumindest zwei Produktstoffe gespalten wird, wobei zumindest ein von einem chemischen Element oder einer chemischen Verbindung gebildeter Bestandteil des Eduktstoffs zu einem ersten Produktstoff oxidiert und zumindest ein weiterer Bestandteil des Eduktstoffs zu einem weiteren Produktstoff reduziert wird. Beispielsweise wird in einem Wasserstoff-Sauerstoff-Elektrolyseur Wasser elektrolytisch in Wasserstoff und Sauerstoff gespalten, wobei Sauerstoffatome in Wassermolekülen oxidiert und Wasserstoffatome in Wassermolekülen reduziert werden, und in einem Chloralkali-Elektrolyseur eine wässrige Natriumchloridlösung in Chlor, Wasserstoff und Natronlauge zerlegt. Bevorzugt ist der Elektrolyseur als Wasserstoff-Sauerstoff-Elektrolyseur ausgebildet. Insbesondere kann zumindest einer der Produktstoffe in eine Umgebung oder in einen Speichertank abgegeben werden. Unter einer "Brennstoffzelle" soll insbesondere eine Einheit verstanden werden, die im Wesentlichen wie ein Elektrolyseur aufgebaut ist, bei der jedoch zumindest zwei Eduktstoffe in einer elektrochemischen Reaktion zu einem Produktstoff reagieren, wobei ein elektrischer Strom frei wird, welcher über den Stromkreis fließt. Durch die elektrochemische Reaktion in der Brennstoffzelle wird somit als elektrischer Strom nutzbare Energie gewonnen. Bevorzugt ist die Brennstoffzelle als eine Wasserstoff-Sauerstoff-Brennstoffzelle ausgebildet, die Wasserstoffgas und Sauerstoffgas zu Wasser umsetzt. Grundsätzlich kann anstelle von Wasser als Produktstoff bzw. Eduktstoff für einen Wasserstoff-Sauerstoff-Elektrolyseur oder eine Wasserstoff-Sauerstoff-Brennstoffzelle ein anderer chemischer Stoff, welcher Wasserstoffatome und Sauerstoffatome enthält, verwendet werden. Auch kann der Elektrolyseur oder die Brennstoffzelle andere Produktstoffe oder Eduktstoffe aufweisen und beispielsweise Kohlendioxid in Kohlenmonoxid und Sauerstoffgas spalten oder Kohlenmonoxid und Sauerstoffgas zu Kohlendioxid umsetzen. Unter einer "Redoxreaktion" soll insbesondere eine Reaktion verstanden werden, bei der zumindest zwei chemische Stoffe miteinander reagieren, wobei zumindest ein chemischer Stoff Elektronen abgibt und somit oxidiert und zumindest ein chemischer Stoff Elektronen aufnimmt und somit reduziert wird. Unter "Wasserstoffgas" soll insbesondere Wasserstoff in molekularer Form, der als Gas vorliegt, verstanden werden. Unter "Sauerstoffgas" soll insbesondere Sauerstoff in molekularer Form, der als Gas vorliegt, verstanden werden.

Insbesondere kann die Redox-Vorrichtung als ein sogenanntes regeneratives Brennstoffzellsystem ausgebildet sein, das zumindest eine Brennstoffzelle und zumindest einen an die zumindest eine Brennstoffzelle gekoppelten Elektrolyseur für Wasserstoff und Sauerstoff aufweist, wobei in einem Aufladevorgang zu einer Energiespeicherung in dem regenerativen Brennstoffzellsystem mittels eines angelegten äußeren elektrischen Stroms der zumindest eine Elektrolyseur für Wasserstoff und Sauerstoff Wasser aus einem Wasservorrat in molekularen Wasserstoff und molekularen Sauerstoff spaltet, wobei der molekulare Wasserstoff und der molekulare Sauerstoff jeweils in Speichertanks abgeführt werden und in einem Entladevorgang zu einer Energieabgabe über elektrischen Strom molekularer Wasserstoff und molekularer Sauerstoff in der zumindest einen Brennstoffzelle zu Wasser reagieren. Das regenerative Brennstoffzellsystem erfüllt somit eine Funktion eines Akkumulators. Insbesondere kann das regenerative Brennstoffzellsystem für einen geschlossenen Betrieb ausgebildet sein. Unter einem "geschlossenen Betrieb" soll insbesondere ein Betrieb verstanden werden, bei dem das regenerative Brennstoffzellsystem über eine Vielzahl von Auflade-Entlade-Zyklen ohne Stoffaustausch mit einer Umgebung betrieben wird. Unter einem "Betrieb ohne Stoffaustausch mit der Umgebung" soll insbesondere verstanden werden, dass das regenerative Brennstoffzellsystem mit einem Anfangsvorrat von Wasser und/oder molekularem Sauerstoff und/oder molekularem Wasserstoff in Speichertanks ausgestattet ist, wobei über die Vielzahl von Auflade-Entlade-Zyklen lediglich der Anfangsvorrat an Wasser und/oder molekularem Sauerstoff und/oder molekularem Wasserstoff umgesetzt wird und eine Ergänzung des Anfangsvorrats nicht stattfindet. Insbesondere ist bei einem Betrieb ohne Stoffaustausch mit der Umgebung eine Entnahme der Speichertanks nicht vorgesehen. Unter einem "Elektrolyt" soll insbesondere ein ionenleitender Stoff, vorzugsweise in Form einer Lösung, beispielsweise einer alkalischen Lösung, verstanden werden.

Unter einem "Reaktionsgasleitungssystem" soll insbesondere ein System, das mindestens eine Gasleitung, in der das Reaktionsgas fließt, sowie bevorzugt Elemente zu einer Erzeugung und Steuerung eines Gasstroms wie Pumpen und Ventile, umfasst, verstanden werden. Unter einer "Sorptionseinheit" soll insbesondere eine Einheit mit zumindest einem von einem Festkörper gebildeten Adsorberelement oder Absorberelement verstanden werden, wobei an Oberflächen eines Adsorberelements in einem Adsorptionsprozess Moleküle bestimmter Molekülsorten gebunden werden und in einem Volumen des Adsorberelements in einem Absorptionsprozess Moleküle bestimmter Molekülsorten gebunden werden. Eine Sorptionseinheit mit Adsorberelementen wird als Adsorbereinheit bezeichnet, eine Sorptionseinheit mit Absorberelementen als Absorbereinheit. Insbesondere können somit die bestimmten Molekülsorten selektiv aus einem Gasstrom und/oder einem Flüssigkeitsstrom entfernt werden, in dem sie zusammen mit weiteren Molekülsorten auftreten. Beispielsweise ist das Adsorberelement als ein Molekularsieb aus einem natürlichen oder künstlichen Zeolithen, als ein Silikagel oder als ein Körper aus Calciumoxid oder aus Calciumsulfat ausgebildet. Vorzugsweise weist das Molekularsieb eine Porengröße zwischen zwei Angström und fünf Angström, besonders bevorzugt zwischen drei Angström und vier Angström auf. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter "Molekülen" sollen in diesem Zusammenhang insbesondere sowohl Moleküle aus mehreren Atomsorten als auch aus einer Atomsorte verstanden werden. Grundsätzlich kann die Sorptionseinheit auch dazu vorgesehen sein, bestimmte chemische Elemente im atomaren Zustand oder als Ionen zu binden. Ist eine Sorptionskapazität einer Sorptionseinheit erschöpft, so muss die Sorptionseinheit ausgewechselt oder regeneriert werden. Unter einer "Regeneration einer Sorptionseinheit" soll insbesondere verstanden werden, dass die Sorptionseinheit einem Desorptionsprozess unterzogen wird, in dem adsorbierte oder absorbierte Moleküle abgegeben werden. Beispielsweise kann eine Desorption adsorbierter Moleküle dadurch erreicht werden, dass ein von Molekülen der Molekülsorte der adsorbierten Moleküle freier Gasstrom, der beispielsweise von einem neutralen Spülgas gebildet ist, über das Adsorberelement geleitet wird, so dass adsorbierte Moleküle in den Gasstrom abgegeben werden. Unter einem "Reaktionsgas" soll insbesondere ein Gas verstanden werden, welches an der Redox-Reaktion als Produkt oder Edukt beteiligt ist. Bevorzugt sind an der Redox-Reaktion zumindest zwei Reaktionsgase als Produkte oder Edukte beteiligt. Unter einem "Fremdmolekül" soll insbesondere ein von Molekülen des Reaktionsgases verschiedenes Molekül verstanden werden, wobei die Fremdmoleküle insbesondere von Molekülen eines von dem Reaktionsgas verschiedenen Reaktionsprodukts oder Reaktionsedukts gebildet sind. Insbesondere entfällt durch Verwendung einer Sorptionseinheit eine Notwendigkeit einer Kühlung des Gasstroms. Bevorzugt umfasst die Redox-Vorrichtung für jedes Reaktionsgas jeweils eine Gasreinigungseinheit. Es kann insbesondere eine passiv betreibbare Gasreinigungseinheit und somit eine Entfernung von Fremdmolekülen aus Gasströmen von Reaktionsgasen mit einem verringerten Energieaufwand erreicht werden.

In einer Weiterbildung der Erfindung wird vorgeschlagen, dass die zumindest eine Gasreinigungseinheit eine weitere Sorptionseinheit aufweist, die parallel geschaltet ist. Bevorzugt werden die Sorptionseinheit und die weitere Sorptionseinheit in einem Wechsel betrieben. Es kann insbesondere eine Gasreinigungseinheit mit einer erhöhten Adsorptionskapazität erreicht werden.

Erfindungsgemäß wird vorgeschlagen, dass die Redox-Vorrichtung einen Elektrolyseur umfasst. Insbesondere ist der Elektrolyseur als alkalischer Elektrolyseur mit einem alkalischen Elektrolyt ausgebildet, der Wasser elektrolytisch in Wasserstoff und Sauerstoff spaltet und bei einer Betriebstemperatur in einem Temperaturbereich von 50 bis 200 Grad Celsius, bevorzugt von 80 bis 200 Grad Celsius, betrieben wird. Bei dem alkalischen Elektrolyseur werden in Gasströmen von erzeugtem Wasserstoff und Sauerstoff noch nicht umgesetzter Eduktstoff in Form von Wasserdampf mitgeführt. Insbesondere wird der Wasserdampf durch die Gasreinigungseinheit entfernt. Bevorzugt wird abgetrenntes Wasser einem Wasserspeicher für den Elektrolyseur für eine spätere Spaltung oder eine Brennstoffzelle, in der es zusammen mit dort entstehendem Wasser abgeführt wird, zugeführt. Es kann insbesondere ein Reinheitsgrad von Reaktionsprodukten des Elektrolyseurs erhöht und Verluste des Eduktstoffs minimiert werden.

Ferner wird erfindungsgemäß vorgeschlagen, dass die Redox-Vorrichtung eine Brennstoffzelle umfasst. Erfindungsgemäß umfasst die Redox-Vorrichtung die Brennstoffzelle zusätzlich zu einem Elektrolyseur. Besonders bevorzugt sind der Elektrolyseur und die Brennstoffzelle miteinander gekoppelt als Brennstoffzellen-Elektrolyseur-Paar ausgebildet. Bevorzugt wird durch die Gasreinigungseinheit aus Gasströmen von Reaktionsprodukten des Elektrolyseurs entfernte Rückstände von Eduktstoffen des Elektrolyseurs der Brennstoffzelle zugeführt, wo es zusammen mit einem dort erzeugten Reaktionsprodukt der Brennstoffzelle einem Speicher zugeführt wird, welcher besonders bevorzugt den Elektrolyseur mit Eduktstoff versorgt. Grundsätzlich kann die Redox-Vorrichtung auch nur eine einzelne Brennstoffzelle umfassen. In einer besonders bevorzugten Ausgestaltung wird insbesondere eine Menge des Eduktstoffs des Elektrolyseurs, welche in Strömen der Reaktionsprodukte des Elektrolyseurs mitgeführt wird und somit für eine Spaltung nicht zur Verfügung steht, minimiert. Es kann insbesondere ein Verlust des Produktstoffs der Brennstoffzelle minimiert werden.

Erfindungsgemäß wird vorgeschlagen, dass die Redox-Vorrichtung zumindest eine Wärmetransporteinheit aufweist, die dazu vorgesehen ist, Abwärme für eine Unterstützung einer Regeneration der zumindest einen Sorptionseinheit zu der zumindest einen Gasreinigungseinheit zu leiten. Unter einer "Wärmetransporteinheit" soll insbesondere eine Einheit verstanden werden, welche dazu vorgesehen ist, Wärmeenergie von einem Ort zu einem anderen zu leiten und die insbesondere einen deutlich höheren Wärmeleitungskoeffizienten aufweist als angrenzende Einheiten, wie beispielsweise ein Kupferrohr oder bevorzugt ein Wärmerohr, bei dem Wärme mittels Verdampfungswärme eines Arbeitsmediums, bevorzugt Wasser, geleitet wird. Das Arbeitsmedium des Wärmerohrs kann von unterschiedlichen Stoffen, beispielsweise von Wasser oder von einer wässrigen Lösung mit flüssigen oder festen Zusätzen, beispielsweise Nanopartikel, zu einer Steigerung einer Wärmeleitfähigkeit, gebildet sein. Unter "Abwärme" soll insbesondere eine bei einem Betrieb eines Elektrolyseurs oder bevorzugt der Brennstoffzelle in dem Elektrolyseur oder der Brennstoffzelle anfallende Wärme verstanden werden. Darunter, dass "die Abwärme die Regeneration unterstützt" wird verstanden, dass ein Wärmeeintrag eine Desorptionswahrscheinlichkeit sorbierter Fremdmolekül aus der Sorptionseinheit erhöht. Es kann insbesondere eine hohe Regenerationseffizienz und eine kurze Regenerationszeit erreicht werden.

Ferner wird vorgeschlagen, dass die eine Sorptionseinheit zumindest einen gegen Wasserstoffgas und/oder Sauerstoffgas resistenten Adsorber aufweist. Insbesondere weist der Adsorber der Sorptionseinheit ein Material auf, welches beständig gegen Wasserstoffgas und Sauerstoffgas ist. Bevorzugt ist der Adsorber als Molekularsieb aus einem natürlichen oder künstlichen Zeolithen, vorzugsweise mit einer Porengröße zwischen drei Angström und vier Angström, ausgebildet. Insbesondere wird die Sorptionseinheit für eine Entfernung von Fremdmolekülen aus Gasströmen von Reaktionsgasen eines Wasserstoff-Sauerstoff-Elektrolyseurs oder einer Wasserstoff-Sauerstoff-Brennstoffzelle eingesetzt und sorbiert bevorzugt Wasser. Es kann insbesondere in einem Wasserstoff-Sauerstoff-Elektrolyseur eine Reinigung von Produktgasströmen an Wasserstoffgas und Sauerstoffgas von mitgeführten Wassermolekülen erreicht werden.

Erfindungsgemäß wird weiterhin ein Verfahren zum Betrieb einer Redox-Vorrichtung, in der zumindest eine Redoxreaktion unter Verbrauch oder Erzeugung zumindest eines Reaktionsgases durchgeführt wird, wobei mit einer Gasreinigungseinheit aus zumindest einem Gasstrom des zumindest einen Reaktionsgases Fremdmoleküle entfernt werden, wobei die Fremdmoleküle durch eine Sorptionseinheit der Gasreinigungseinheit mittels Sorption aus dem Gasstrom entfernt werden, vorgeschlagen. Bevorzugt wird das Verfahren zum Betrieb einer Redox-Vorrichtung mit einem Elektrolyseur und einer Brennstoffzelle, die miteinander gekoppelt als Elektrolyseur-Brennstoffzellen-Paar ausgebildet sind, genutzt. Insbesondere sind die Fremdmoleküle, die in der Gasreinigungseinheit sorbiert werden, von Molekülen des Reaktionsprodukts der Brennstoffzelle und des damit identischen Reaktionsedukts des Elektrolyseurs gebildet. Es kann insbesondere eine passive Entfernung von Fremdmolekülen aus Gasströmen von Reaktionsgasen mit einem geringen Energieaufwand erreicht werden.

In einer Weiterbildung der Erfindung wird vorgeschlagen, dass die Sorptionseinheit im Wechsel mit einer weiteren Sorptionseinheit betrieben wird, wobei eine der Sorptionseinheiten während eines Betriebs der anderen Sorptionseinheit regeneriert wird. Insbesondere sind die Sorptionseinheiten parallel zueinander geschaltet und es wird zu einer Regeneration einer der Sorptionseinheiten zwischen den Sorptionseinheiten umgeschaltet und der Gasstrom von der zu regenerierenden Sorptionseinheit zu einer weiteren Sorptionseinheit umgeleitet. Es kann insbesondere eine kontinuierlich betreibbare Gasreinigungseinheit für die Redox-Vorrichtung erreicht werden.

Des Weiteren wird vorgeschlagen, dass die Sorptionseinheit mit reinem Reaktionsgas regeneriert wird. Unter "reinem Reaktionsgas" soll insbesondere ein von Fremdmolekülen zumindest weitgehend freies Reaktionsgas verstanden werden, welches einen maximalen Fremdmolekülanteil von einem ppm aufweist. Insbesondere sind die desorbierten Fremdmoleküle von Molekülen eines Reaktionsprodukts der Brennstoffzelle gebildet, so dass diese in der Brennstoffzelle in einen Produktstrom eingebracht werden. Es kann insbesondere ein Verzicht auf ein zusätzliches Spülgas zu einer Spülung der Sorptionseinheit für die Regeneration erreicht werden.

Weiterhin wird vorgeschlagen, dass mit desorbierten Fremdmolekülen beladenes Reaktionsgas in zumindest einem Betriebszustand einer Brennstoffzelle zugeführt wird. Insbesondere sind die desorbierten Fremdmoleküle von Molekülen eines Reaktionsprodukts der Brennstoffzelle gebildet. Es kann insbesondere eine einfache Abführung der desorbierten Fremdmoleküle und ein Verzicht auf einen separaten Abführungskreislauf erreicht werden.

Ferner wird vorgeschlagen, dass eine Regeneration einer Sorptionseinheit durch Erwärmung mittels Abwärme einer Brennstoffzelle unterstützt wird. Insbesondere wird durch die Abwärme eine durchschnittliche Bewegungsenergie adsorbierter oder absorbierter Moleküle erhöht, wodurch eine Wahrscheinlichkeit einer Desorption erhöht wird. Insbesondere wird die Abwärme über eine Wärmeleitungseinheit zugeführt. Bevorzugt ist die Abwärme von einer Brennstoffzelle gebildet. Es kann insbesondere eine Nutzung anfallender Abwärme und eine kurze Regenerationszeit erreicht werden.

Die erfindungsgemäße Redox-Vorrichtung soll hierbei nicht auf die oben beschriebene Anwendung und Ausführungsform beschränkt sein. Insbesondere kann die erfindungsgemäße Redox-Vorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

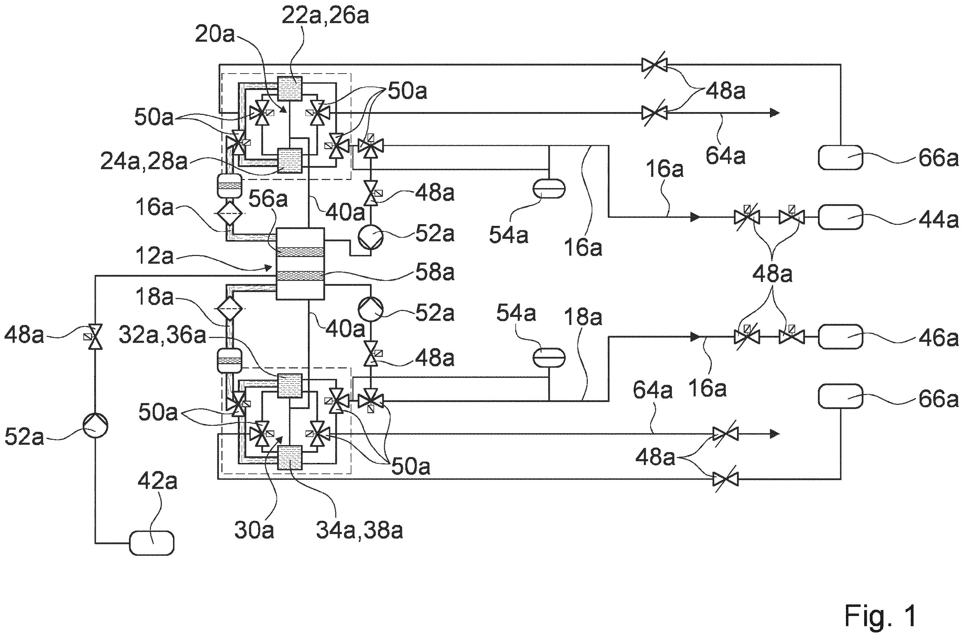

- Fig. 1: eine erfindungsgemäße Redox-Vorrichtung zur Durchführung einer Redoxreaktion unter Verbrauch oder Erzeugung zumindest eines Reaktionsgases, mit einem Elektrolyseur, mit einem Reaktionsgasleitungssystem zur Führung eines Gasstroms eines Reaktionsgases, und mit einer Gasreinigungseinheit zu einer Entfernung von Fremdmolekülen aus dem Gasstrom, die mit dem zumindest einen Reaktionsgasleitungssystem verbunden ist, wobei die Gasreinigungseinheit eine Sorptionseinheit zu einer Entfernung der Fremdmoleküle aufweist und

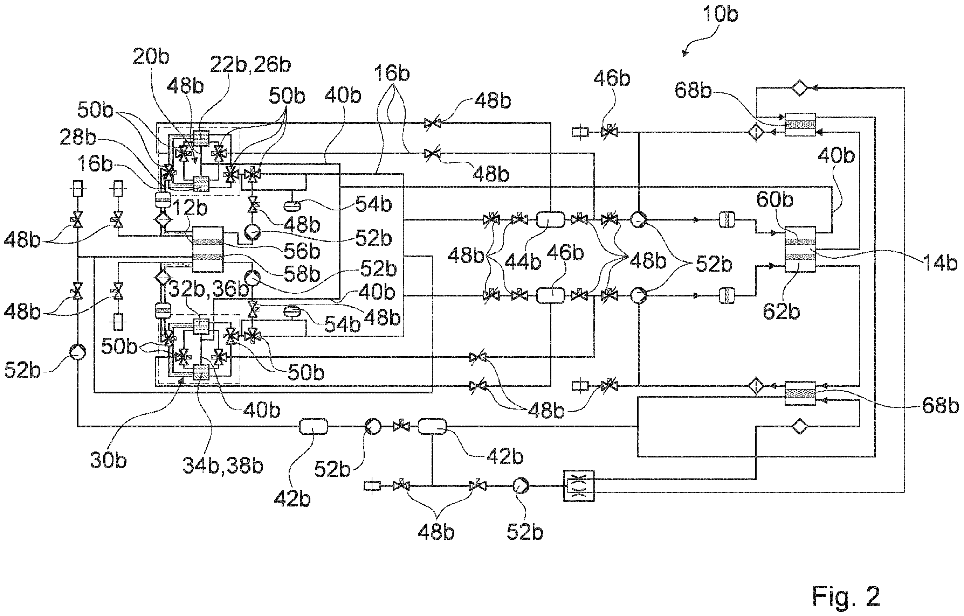

- Fig. 2: eine weitere erfindungsgemäße Redox-Vorrichtung, die ein Elektrolyseur-Brennstoffzellen-Paar aufweist.

### Beschreibung der Ausführungsbeispiele

Fig. 1 zeigt eine Redox-Vorrichtung 10a zur Durchführung zumindest einer Redoxreaktion unter Verbrauch oder Erzeugung zweier Reaktionsgase, mit zwei Reaktionsgasleitungssystemen 16a, 18a zur Führung eines Gasstroms eines Reaktionsgases, und mit zwei Gasreinigungseinheiten 20a, 30a zu einer Entfernung von Fremdmolekülen aus jeweils einem Gasstrom eines Reaktionsgases, die mit dem jeweiligen Reaktionsgasleitungssystem 16a, 18a verbunden sind. Die Redox-Vorrichtung 10a ist als Wasserstoff-Sauerstoff-Redox-Vorrichtung 10a ausgebildet und weist einen Elektrolyseur 12a auf, der mittels einem elektrischen Strom Wasser elektrolytisch in Wasserstoff und Sauerstoff spaltet. Der Elektrolyseur 12a umfasst zwei Elektroden 56a, 58a und eine zwischen den Elektroden 56a, 58a angeordnete, nicht dargestellte Membran, die mit einer Kaliumhydroxidlösung als Elektrolyt gefüllt ist. Wasser wird dem Elektrolyseur 12a über eine Leitung aus einem Wasserspeicher 42a zugeführt. In einer Reaktionszone in einem Kontaktbereich der Elektrode 56a und der elektrolytgefüllten Membran wird entstehendes Wasserstoffgas über das Reaktionsgasleitungssystem 16a zu einem Wasserstoffspeicher 44a geleitet. Hierbei durchläuft das Wasserstoffgas die Gasreinigungseinheit 20a, welche eine Sorptionseinheit 22a zu einer Entfernung der Fremdmoleküle und eine weitere Sorptionseinheit 24a aufweist, die parallel zu der Sorptionseinheit 22a geschaltet ist. In einer Reaktionszone in einem Kontaktbereich der Elektrode 58a und der elektrolytgefüllten Membran wird entstehendes Sauerstoffgas über das Reaktionsgasleitungssystem 18a zu einem Sauerstoffspeicher 46a geleitet. Hierbei durchläuft das Sauerstoffgas die Gasreinigungseinheit 30a, welche eine Sorptionseinheit 32a zu einer Entfernung der Fremdmoleküle und eine weitere Sorptionseinheit 34a aufweist, die parallel zu der Sorptionseinheit 32a geschaltet ist. Die Reaktionsgasleitungssysteme 16a, 18a umfassen neben gasdichten Rohrleitungen auch Ventile 48a und Dreiwegeventile 50a zu einer Steuerung von Durchflüssen der Reaktionsgase durch die Rohrleitungen und Pumpen 52a zu einer Förderung der Reaktionsgase. Der Elektrolyseur 12a ist als alkalischer Elektrolyseur 12a ausgebildet und wird bei einer Betriebstemperatur in einem Temperaturbereich von 80 bis 200 Grad Celsius betrieben. Zu spaltendes Wasser, das in einem flüssigen Zustand zugeführt wird, wird aufgrund einer Höhe der Betriebstemperatur in einer Zelle des Elektrolyseurs 12a zu Wasserdampf, wobei Teile des Wasserdampfes in den Gasströmen der Reaktionsgase Wasserstoff und Sauerstoff mitgenommen werden.

Die Sorptionseinheiten 22a, 24a 32a, 34a sind als Adsorptionseinheiten ausgebildet, welche zumindest einen gegen Wasserstoffgas und Sauerstoffgas resistenten Adsorber 26a, 28a, 36a, 38a aufweisen. Die Adsorber 26a, 28a, 36a, 38a sind als Molekularsiebe aus einem Zeolithen mit einer Porengröße von dreieinhalb Angström ausgebildet. Alternativ können die Adsorber 26a, 28a, 36a, 38a beispielsweise als Silikagele ausgebildet sein. An Oberflächen der Adsorber 26a, 28a, 36a, 38a werden Wassermoleküle adsorbiert.

In dem erfindungsgemäßen Verfahren zum Betrieb der Redox-Vorrichtung 10a werden mit den Gasreinigungseinheiten 20a, 30a aus Gasströmen der Reaktionsgase Wasserstoff und Sauerstoff Fremdmoleküle entfernt, wobei die Fremdmoleküle durch die Sorptionseinheiten 22a, 24a, 32a, 34a der Gasreinigungseinheiten 20a, 30a mittels Sorption aus dem Gasstrom entfernt werden. Die Sorptionseinheiten 22a, 32a werden dabei im Wechsel mit der weiteren Sorptionseinheit 24a, 34a betrieben. Dabei wird eine der Sorptionseinheiten 22a, 24a, 32a, 34a während eines Betriebs der anderen Sorptionseinheit 24a, 22a, 34a, 32a regeneriert. Es wird jeweils die Sorptionseinheit 22a, 24a, 32a, 34a genutzt, bis eine Aufnahmekapazität des Adsorbers 26a, 28a, 36a, 38a erschöpft ist. Über Gasanalysatoren 54a, die in dem Gasstrom des jeweiligen Reaktionsgases zwischen der Gasreinigungseinheit 20a und dem Wasserstoffspeicher 44a oder der Gasreinigungseinheit 30a und dem Wasserstoffspeicher 44a angeordnet sind, wird ein Wassergehalt des Gasstroms nach Durchlauf der Gasreinigungseinheit 20a, 30a bestimmt. Ist die Aufnahmekapazität des Adsorbers 26a, 28a, 36a, 38a der Sorptionseinheit 22a, 24a, 32a, 34a erschöpft, so steigt ein gemessener Anteil von Wasserdampf in dem Gasstrom des Reaktionsgases nach Durchlauf der Sorptionseinheit 22a, 24a, 32a, 34a an und wird durch den Gasanalysator 54a detektiert. Eine nicht dargestellte Steuer- und Regeleinheit schaltet ein in der Gasreinigungseinheit 20a, 30a angeordnetes Dreiwegeventil 50a um, so dass nun die andere Sorptionseinheit 24a, 22a, 34a, 32a mit einem Adsorber 28a, 26a, 38a, 36a, dessen Aufnahmekapazität noch nicht erschöpft ist, von dem Gasstrom des Reaktionsgases durchströmt wird.

Währenddessen wird die Sorptionseinheit 22a, 24a, 32a, 34a mit Spülgas aus einem Spülgasbehälter 66a regeneriert und mit desorbierten Fremdmolekülen beladenes Spülgas über eine Ableitung 64a entfernt. Das Spülgas ist verschieden von den desorbierten Fremdmolekülen, sodass diese sich von den Sorptionseinheiten 22a, 24a, 32a, 34a lösen und von einem Gasstrom des Spülgases weggeführt werden. Alternativ können die Sorptionseinheiten 22a, 24a, 32a, 34a mit reinem Reaktionsgas regeneriert werden, wodurch eine Vorhaltung eines separaten Spülgases entfällt. Alternativ kann als Spülgas angesaugte Luft aus einer Umgebung verwendet werden. Erfindungsgemäß wird die Regeneration durch Wärmezuleitung unterstützt. Eine Wärmetransporteinheit 40a, die von einem Wärmerohr gebildet ist, leitet hierzu Abwärme des Elektrolyseurs 12a zu der jeweiligen zu regenerierenden Sorptionseinheit 22a, 24a, 32a, 34a. In der Wärmetransporteinheit 40a wird die Wärme mittels Verdampfungswärme eines von Wasser gebildeten Arbeitsmediums mit geringen Verlusten transportiert.

In der Figur 2 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des Ausführungsbeispiels der Figur 1 verwiesen wird. Zur Unterscheidung der Ausführungsbeispiele ist der Buchstabe a den Bezugszeichen des Ausführungsbeispiels in der Figur 1 nachgestellt. In dem Ausführungsbeispiel der Figur 2 ist der Buchstabe a durch den Buchstaben b ersetzt.

Fig. 2 zeigt eine weitere Redox-Vorrichtung 10b zur Durchführung einer Redoxreaktion unter Verbrauch und unter Erzeugung zweier Reaktionsgase, mit zwei Reaktionsgasleitungssysteme 16b, 18b zur Führung eines Gasstroms eines Reaktionsgases, und mit zwei Gasreinigungseinheiten 20b, 30b zu einer Entfernung von Fremdmolekülen aus jeweils einem Gasstrom eines Reaktionsgases, die mit dem jeweiligen Reaktionsgasleitungssystem 16b, 18b verbunden sind. Die Redox-Vorrichtung 10b umfasst einen Elektrolyseur 12b und eine Brennstoffzelle 14b, die miteinander gekoppelt als Brennstoffzellen-Elektrolyseur-Paar ausgebildet sind. Die Redox-Vorrichtung 10b mit dem Brennstoffzellen-Elektrolyseur-Paar ist als regeneratives Brennstoffzellsystem ausgebildet und dient als Energiespeichervorrichtung. Die Redox-Vorrichtung 10b wird zu einer Aufladung mit einer Stromquelle verbunden, wobei mit elektrischen Strom aus der Stromquelle in dem Elektrolyseur 12b Wasser elektrolytisch in Wasserstoff und Sauerstoff gespalten wird. Um Strom aus der Redox-Vorrichtung 10b zu gewinnen, wird die Redox-Vorrichtung 10b mit einem Stromverbraucher verbunden und in der Brennstoffzelle 14b Wasserstoff und Sauerstoff unter Stromerzeugung zu Wasser umgesetzt. Die Redox-Vorrichtung 10b kann mit einem Stromnetz verbunden sein und in dieses je nach Bedarf Strom einspeisen oder aus diesem entnehmen. Die Redox-Vorrichtung 10b ist für einen geschlossenen Betrieb ausgebildet, bei dem ein Anfangsvorrat an Wasser, Wasserstoffgas und Sauerstoffgas ohne Stoffaustausch mit einer Umgebung über eine Vielzahl von Betriebszyklen ineinander umgewandelt wird.

Der Elektrolyseur 12b umfasst zwei Elektroden 56b, 58b und eine zwischen den Elektroden 56b, 58b angeordnete, nicht dargestellte Membran, die mit einer Kaliumhydroxidlösung als Elektrolyt gefüllt ist. Die Brennstoffzelle 14b umfasst zwei Elektroden 60b, 62b und eine zwischen den Elektroden 60b, 62b angeordnete, nicht dargestellte Membran, die mit einer Kaliumhydroxidlösung als Elektrolyt gefüllt ist

Die zwei Gasreinigungseinheiten 20b, 30b weisen jeweils eine Sorptionseinheit 22b, 32b zu einer Entfernung der Fremdmoleküle und eine weitere Sorptionseinheit 24b, 34b, die parallel geschaltet ist, auf. Die Gasreinigungseinheit 20b ist mit den Sorptionseinheiten 22b, 24b, die jeweils einen gegen Wasserstoffgas und Sauerstoffgas resistenten Adsorber 26b, 28b aufweisen, innerhalb des Reaktionsgasleitungssystems 16b für Wasserstoffgas angeordnet. Die Gasreinigungseinheit 30b ist mit den Sorptionseinheiten 32b, 34b, die jeweils einen gegen Wasserstoffgas und Sauerstoffgas resistenten Adsorber 36b, 38b aufweist, innerhalb des Reaktionsgasleitungssystems 18b für Sauerstoffgas angeordnet. Die Adsorber 26b, 28b, 36b, 38b sind als Molekularsiebe aus einem Zeolithen mit einer Porengröße von dreieinhalb Angström ausgebildet.

Die Redox-Vorrichtung 10b umfasst ferner eine Wärmetransporteinheit 40b, die dazu vorgesehen ist, Abwärme für eine Unterstützung einer Regeneration der jeweiligen Sorptionseinheit 22b, 24b, 32b, 34b zu den Gasreinigungseinheiten 20b, 30b zu leiten. Die Wärmetransporteinheit 40b ist als ein Wärmerohr mit Wasser als Betriebsmedium ausgebildet.

In dem erfindungsgemäßen Verfahren zum Betrieb der Redox-Vorrichtung 10b werden mit den Gasreinigungseinheiten 20b, 30b aus Gasströmen der Reaktionsgase Wasserstoff und Sauerstoff Fremdmoleküle entfernt, wobei die Fremdmoleküle durch die Sorptionseinheiten 22b, 24b, 32b, 34b der Gasreinigungseinheiten 20b, 30b mittels Sorption aus dem Gasstrom entfernt werden. Die Gasreinigungseinheiten 20b, 30b reinigen dabei Gasströme von Wasserstoffgas und Sauerstoffgas als Produktgase des Elektrolyseurs 12b. Bei einem Betrieb der Brennstoffzelle 14b werden Gasströme der Eduktstoffe Wasserstoffgas und Sauerstoffgas über Gasräume der Brennstoffzelle 14b geführt, wobei ein Teil zu Wasser umgesetzt wird, und in einem Kreislauf wieder über die Gasräume gepumpt. Entstandenes Wasser wird in Form von Wasserdampf mitgeführt und in dem Kreislauf mittels Membrantrocknern 68b entfernt. Umgesetzte Stoffmengen von Wasserstoffgas und Sauerstoffgas werden durch Zuleitungen aus einem Wasserstoffspeicher 44b und einem Sauerstoffspeicher 46b ergänzt. Alternativ oder zusätzlich kann Wasser als Reaktionsprodukt auch mittels der Gasreinigungseinheiten 20b, 30b mit Sorptionseinheiten 22b, 24b, 32b, 34b entfernt werden.

Die Sorptionseinheiten 22b, 32b werden dabei im Wechsel mit der weiteren Sorptionseinheit 24b, 34b betrieben, wobei eine der Sorptionseinheiten 22b, 24b, 32b, 34b während eines Betriebs der anderen Sorptionseinheit 24b, 22b, 34b, 32b regeneriert wird. Es wird jeweils die Sorptionseinheit 22b, 24b, 32b, 34b genutzt, bis eine Aufnahmekapazität des Adsorbers 26b, 28b, 36b, 38b erschöpft ist. Die jeweilige Sorptionseinheit 22b, 24b, 32b, 34b wird mit reinem Reaktionsgas regeneriert, wobei zu einer Vermeidung einer Entstehung von Knallgas die Sorptionseinheiten 22b, 24b mit reinem Wasserstoffgas aus dem Wasserstoffspeicher 44b und die Sorptionseinheiten 32b, 34b mittels reinem Sauerstoffgas aus dem Sauerstoffspeicher 46b regeneriert werden. Das reine Reaktionsgas ist weitgehend frei von Wasserdampf. Eine Regeneration der Sorptionseinheiten 22b, 24b, 32b, 34b wird durch eine Erwärmung mittels Abwärme der Brennstoffzelle 14b unterstützt, wobei die Abwärme über die Wärmetransporteinheit 40b zugeleitet wird. Mit desorbierten Fremdmolekülen beladenes Reaktionsgas wird der Brennstoffzelle 14b zugeführt, wobei das mit desorbierten Fremdmolekülen beladene Reaktionsgas vor Zuführung zu der Brennstoffzelle 14b in einem Speicher, insbesondere dem Wasserstoffspeicher 44b oder dem Sauerstoffspeicher 46b gespeichert sein kann.

### Bezugszeichen

- 10: Redox-Vorrichtung
- 12: Elektrolyseur
- 14: Brennstoffzelle
- 16: Reaktionsgasleitungssystem
- 18: Reaktionsgasleitungssystem
- 20: Gasreinigungseinheit
- 22: Sorptionseinheit
- 24: Sorptionseinheit
- 26: Adsorber
- 28: Adsorber
- 30: Gasreinigungseinheit
- 32: Sorptionseinheit
- 34: Sorptionseinheit
- 36: Adsorber
- 38: Adsorber
- 40: Wärmetransporteinheit
- 42: Wasserspeicher
- 44: Wasserstoffspeicher
- 46: Sauerstoffspeicher
- 48: Ventil
- 50: Dreiwegeventil
- 52: Pumpe
- 54: Gasanalysator
- 56: Elektrode
- 58: Elektrode
- 60: Elektrode
- 62: Elektrode
- 64: Ableitung
- 66: Spülgasbehälter
- 68: Membrantrockner

## Patentansprüche

1. Redox-Vorrichtung, insbesondere Wasserstoff-Sauerstoff-Redox-Vorrichtung (10a-b), zur Durchführung zumindest einer Redoxreaktion unter Verbrauch oder Erzeugung von zumindest einem Reaktionsgas, mit zumindest einem Reaktionsgasleitungssystem (16a-b, 18a-b) zur Führung eines Gasstroms eines Reaktionsgases, mit zumindest einer Gasreinigungseinheit (20a-b, 30a-b) zu einer Entfernung von Fremdmolekülen aus dem Gasstrom, die mit dem zumindest einen Reaktionsgasleitungssystem (16a-b, 18a-b) verbunden ist, wobei die zumindest eine Gasreinigungseinheit (20a-b, 30a-b) eine Sorptionseinheit (22a-b, 32a-b) zu einer Entfernung der Fremdmoleküle aufweist, mit einem Elektrolyseur (12a-b) und mit einer Brennstoffzelle (14b), **gekennzeichnet durch** zumindest eine Wärmetransporteinheit (40a-b), die dazu vorgesehen ist, Abwärme für eine Unterstützung einer Regeneration der zumindest einen Sorptionseinheit (22b, 24b, 32b, 34b) zu der zumindest einen Gasreinigungseinheit (20b, 30b) zu leiten, wobei die Abwärme eine bei einem Betrieb des Elektrolyseurs (12a-b) oder der Brennstoffzelle (14b) anfallende Wärme ist, wobei bei der Regeneration ein Wärmeeintrag eine Desorptionswahrscheinlichkeit sorbierter Fremdmoleküle aus der zumindest einen Sorptionseinheit (22b, 24b, 32b, 34b) erhöht.

2. Redox-Vorrichtung nach Anspruch 1, **dadurch gekennzeichnet, dass** die zumindest eine Gasreinigungseinheit (20a-b, 30a-b) eine weitere Sorptionseinheit (24a-b, 34a-b) aufweist, die parallel geschaltet ist.

3. Redox-Vorrichtung nach einem der vorhergehenden Ansprüche, **dadurch gekennzeichnet, dass** die Sorptionseinheit (22a-b, 24a-b, 32a-b, 34a-b) zumindest einen gegen Wasserstoffgas und/oder Sauerstoffgas resistenten Adsorber (26a-b, 28a-b, 36a-b, 38a-b) aufweist.

4. Verfahren zum Betrieb einer Redox-Vorrichtung (10a-b), in der zumindest eine Redoxreaktion unter Verbrauch oder Erzeugung zumindest eines Reaktionsgases durchgeführt wird, wobei mit einer Gasreinigungseinheit (20a-b, 30a-b) aus zumindest einem Gasstrom des zumindest einen Reaktionsgases Fremdmoleküle entfernt werden, wobei die Fremdmoleküle durch eine Sorptionseinheit (22a-b, 32a-b) der Gasreinigungseinheit (20a-b, 30a-b) mittels Sorption aus dem Gasstrom entfernt werden, wobei die Sorptionseinheit (22a-b, 24a-b, 32a-b, 34a-b) mit reinem Reaktionsgas regeneriert wird, wobei mit desorbierten Fremdmolekülen beladenes Reaktionsgas in zumindest einem Betriebszustand einer Brennstoffzelle (14b) zugeführt wird, **dadurch gekennzeichnet, dass** die Regeneration der Sorptionseinheit (22a-b, 24a-b, 32a-b, 34a-b) durch Erwärmung mittels Abwärme einer Brennstoffzelle (14b) unterstützt wird, wobei eine Wärmetransporteinheit (40a-b) Abwärme für eine Unterstützung einer Regeneration der Sorptionseinheit (22a-b, 24a-b, 32a-b, 34a-b) zu der Gasreinigungseinheit (20a-b, 30a-b) leitet.

5. Verfahren nach Anspruch 4, **dadurch gekennzeichnet, dass** die Sorptionseinheit (22a-b, 32a-b) im Wechsel mit einer weiteren Sorptionseinheit (24a-b, 34a-b) betrieben wird, wobei eine der Sorptionseinheiten (22a-b, 24a-b, 32a-b, 34a-b) während eines Betriebs der anderen Sorptionseinheit (24a-b, 22a-b, 34a-b, 32a-b) regeneriert wird.

## Claims

1. Redox device, in particular hydrogen-oxygen redox device (10a-b), for carrying out at least one redox reaction under consumption or generation of at least one reaction gas,
with at least one reaction gas conduction system (16a-b, 18a-b) for conducting a gas flow of a reaction gas,
with at least one gas purification unit (20a-b, 30a-b) for a removal of foreign molecules from the gas flow, which is connected to the at least one reaction gas conduction system (16a-b, 18a-b),
wherein the at least one gas purification unit (20a-b, 30a-b) comprises a sorption unit (22a-b, 32a-b) for a removal of the foreign molecules,
with an electrolyser (12a-b) and
with a fuel cell (14b),
**characterised by** at least one heat transport unit (40a-b), which is configured to conduct a waste heat for supporting a regeneration of the at least one sorption unit (22b, 24b, 32b, 34b) to the at least one gas purification unit (20b, 30b),
wherein the waste heat is a heat that occurs in an operation of the electrolyser (12a-b) or of the fuel cell (14b),
wherein, in the regeneration, a heat input increases a desorption probability of sorbed foreign molecules from the at least one sorption unit (22b, 24b, 32b, 34b).

2. Redox device according to claim 1, **characterised in that** the at least one gas purification unit (20a-b, 30a-b) comprises a further sorption unit (24a-b, 34a-b) that is connected in parallel.

3. Redox device according to one of the preceding claims, **characterised in that** the sorption unit (22a-b, 24a-b, 32a-b, 34a-b) comprises at least one adsorber (26a-b, 28a-b, 36a-b, 38a-b) that is resistant against hydrogen gas and/or oxygen gas.

4. Method for an operation of a redox device (10a-b), in which at least one redox reaction is carried out under consumption or generation of at least one reaction gas, wherein foreign molecules are removed from at least one gas flow of the at least one reaction gas by way of a gas purification unit (20a-b, 30a-b),
wherein the foreign molecules are removed from the gas flow by means of a sorption unit (22a-b, 32a-b) of the gas purification unit (20a-b, 30a-b) via sorption,
wherein the sorption unit (22a-b, 24a-b, 32a-b, 34a-b) is regenerated with a pure reaction gas,
wherein in at least one operation state a reaction gas loaded with desorbed foreign molecules is fed to a fuel cell (14b),
**characterised in that** the regeneration of the sorption unit (22a-b, 24a-b, 32a-b, 34a-b) is supported via a heating of a fuel cell (14b) by the waste heat,
wherein a heat transport unit (40a-b) conducts a waste heat for supporting a regeneration of the sorption unit (22a-b, 24a-b, 32a-b, 34a-b) to the gas purification unit (20a-b, 30a-b).

5. Method according to claim 4,
**characterised in that** the sorption unit (22a-b, 32a-b) is operated alternatingly with a further sorption unit (24a-b, 34a-b),
wherein one of the sorption units (22a-b, 24a-b, 32a-b, 34a-b) is regenerated during operation of the other sorption unit (24a-b, 22a-b, 34a-b, 32a-b).

## Revendications

1. Dispositif redox, en particulier dispositif redox hydrogène-oxygène (10a-b), pour conduire au moins une réaction redox en consommant ou générant au moins un gaz de réaction,
avec au moins un système à conduit de gaz de réaction (16a-b, 18a-b) pour conduire un flux de gaz d'un gaz de réaction,
avec au moins une unité à purification de gaz (20a-b, 30a-b) pour un enlèvement de molécules étrangers du flux de gaz, qui est raccordée avec l'au moins un système à conduit de gaz de réaction (16a-b, 18a-b),
où l'au moins une unité à purification de gaz (20a-b, 30a-b) comporte une unité de sorption (22a-b, 32a-b) pour un enlèvement des molécules étrangers,
avec un électrolyseur (12a-b) et avec une pile à combustible (14b), **caractérisé par** au moins une unité transport-chaleur (40a-b) configurée à conduire de la chaleur fatale pour supporter une régénération de l'au moins une unité de sorption (22b, 24b, 32b, 34b) à l'au moins une unité à purification de gaz (20b, 30b),
la chaleur fatale étant une chaleur survenant dans un fonctionnement de l'électrolyseur (12a-b) ou de la pile à combustible (14b),
où dans la régénération un apport de chaleur accroît une probabilité d'une désorption de molécules étrangers sorbés de l'au moins une unité de sorption (22b, 24b, 32b, 34b).

2. Dispositif redox selon la revendication 1,
**caractérisé en ce que** l'au moins une unité à purification de gaz (20a-b, 30a-b) comporte une unité de sorption de plus (24a-b, 34a-b), qui est couplée en parallèle.

3. Dispositif redox selon l'une quelconque des revendications précédentes,
**caractérisé en ce que** l'unité de sorption (22a-b,24a-b, 32a-b, 34a-b) comporte au moins un adsorbant (26a-b, 28a-b, 36a-b, 38a-b), qui est résistant à l'hydrogène gazeux et/ou à l'oxygène gazeux.

4. Procédé pour une opération d'un dispositif redox (10a-b), dans lequel au moins une réaction redox est conduite en consommant ou générant au moins un gaz de réaction,
où des molécules étrangers sont enlevés d'au moins un flux de gaz de l'au moins un gaz de réaction par le biais d'une unité à purification de gaz (20a-b, 30a-b), les molécules étrangers étant enlevés du flux de gaz via sorption par une unité de sorption (22a-b, 32a-b) de l'unité à purification de gaz (20a-b, 30a-b),
l'unité de sorption (22a-b, 24a-b, 32a-b, 34a-b) étant régénérée par le biais d'un gaz de réaction pur,
où un gaz de réaction chargé de molécules étrangers désorbés est alimenté à une pile à combustible (14b) en au moins un état opératif,
**caractérisé en ce que** la régénération de l'unité de sorption (22a-b, 24a-b, 32a-b, 34a-b) est supportée par chauffage via chaleur fatale d'une pile à combustible (14b),
une unité transport-chaleur (40a-b) conduisant de la chaleur fatale à l'unité à purification de gaz (20a-b, 30a-b) pour supporter une régénération de l'unité de sorption (22a-b, 24a-b, 32a-b, 34a-b).

5. Procédé selon la revendication 4,
**caractérisé en ce que** l'unité de sorption (22a-b, 32a-b) est opérée en alternance avec une unité de sorption de plus (24a-b, 34a-b),
où l'une des unités de sorption (22a-b, 24a-b, 32a-b, 34a-b) est régénérée pendant un fonctionnement de l'autre unité de sorption (24a-b, 22a-b, 34a-b, 32a-b).
